# EUROPÄISCHE PATENTSCHRIFT

(11) **EP 1 567 734 B1**
(45) Veröffentlichungstag und Bekanntmachung des Hinweises auf die Patenterteilung: **26.09.2007**
(21) Anmeldenummer: 03782283.0
(22) Anmeldetag: 02.12.2003
(51) Int. Cl.: E04F 15/02, E04F 13/08, E04F 15/04, C09J 5/00

(54) **VERFAHREN ZUR BELEIMUNG EINES ELEMENTS**
METHOD FOR COATING AN ELEMENT WITH GLUE
PROCEDE D'ENCOLLAGE D'UN ELEMENT

(30) Priorität: 02.12.2002 DE 10256384; 17.04.2003 DE 10318093
(43) Veröffentlichungstag der Anmeldung: 31.08.2005
(73) Patentinhaber: Kronotec AG, 6006 Luzern (CH)
(72) Erfinder: BRAUN, Roger, CH-6130 Willisau LU (CH); WALDMÜLLER, Alfred, 66957 Vinningen (DE)
(74) Vertreter: Wenzel & Kalkoff
(86) Internationale Anmeldenummer: PCT/EP2003/013577
(87) Internationale Veröffentlichungsnummer: WO 2004/050780

(56) Entgegenhaltungen:
- WO-A-02/092711
- DE-A- 19 547 864
- GB-A- 2 377 457

## Beschreibung

Die Erfindung betrifft ein Verfahren zum Herstellen eines beleimten Holzwerkstoff-Paneels, das beleimte Holzwerkstoff-Paneel und eine Klebstoff-Verbindung.

Klebstoffe und die entsprechenden Klebstoffverbindungen lassen sich vier Hauptgruppen zuordnen. Erstens in Klebstoffe, die nass, also in wässrigem Medium oder in organischen Lösungsmitteln gelöst auf das bzw. die zu verleimenden Elemente aufgetragen werden. Die zu verbindenden Elemente werden beleimt, gefügt und durch Hilfsmittel, z. B. Zwingen oder Klemmen in der vorgegebenen Stellung fixiert während des Zeitraums, in dem der Klebstoff durch Entfernen des Wassers oder des Lösungsmittels oder durch chemische Reaktion aushärtet und die Klebstoffverbindung aufgebaut wird. Die Dauer des Abbindens beträgt in der Regel einige Stunden. Das Aufbringen des Klebstoffs erfolgt unmittelbar vor dem Fügen der Elemente.

Zweitens sind Klebstoffe bekannt, die aus zwei miteinander in Wechselwirkung stehenden Komponenten bestehen. Eine erste Komponente wird auf das bzw. die zu verbinden Elemente aufgetragen, ggf. getrocknet, so dass ein Klebstofffilm entsteht. Dieser Klebstoffilm wird dann aktiviert durch Zugabe der zweiten Komponente, beispielsweise durch Zugabe geringer Mengen Wasser. Die zweite Komponente kann entweder unmittelbar vor dem Verarbeiten aufgegeben werden. Sie kann aber auch, z. B. in Form von Mikrokapseln, bereits Bestandteil des Klebstofffilms sein, jedoch räumlich von der ersten Komponente getrennt. Typische Beispiele dieser Technologien beschreiben WO 01/94721; WO 02/063114; WO 02/092711 und DE 102 12 324.

Drittens sind Klebstoffe bekannt, die als Film auf zu verbindende Elemente aufgetragen werden, und die dann ohne Zusatz weiterer Komponenten, dafür unter längerem Einwirken von erhöhten Temperaturen und/oder erhöhtem Druck erweichen, schließlich unter Abkühlung erneut aushärten und auf diese Weise eine Verbindung zwischen den Elementen aufbauen. Hier handelt es sich um Klebstoffe, die meist gewerblich angewendet werden, da die Verarbeitungsbedingungen hinsichtlich Temperatur und Druck genau einzuhalten sind. Diese Klebstoffe werden werksseitig verarbeitet bis hin zum vollständigen Abbinden des Klebstoffs.

Viertens sind Klebstoffe bekannt, die in getrocknetem Zustand eine klebrige Oberfläche aufweisen und dadurch bei Berührung ohne größeren Druck eine Verklebung eingehen.

Da die Klebkraft dieser Klebstoffe niedrig ist, sind die Verklebungen in der Regel wieder ablösbar. In der GB 2 377 457 wird ein solcher Haftkleber (pressure sensitive adhesive) zum Verbinden zweier Paneele vorgeschlagen. Der Film, den ein Haftkleber bildet, ist jedoch weich und auf Dauer klebrig, wird also durch z. B. Staubablagerungen außer Funktion gesetzt. Die geringen Kohäsionskräfte, die ein Haftkleber-Film entfaltet, bewirken, dass sich die durch den Haftkleber verbundenen Elemente schon unter geringster Beanspruchung wieder voneinander lösen. Die minimale Klebkraft und das unvermeidbare Verschmutzen des Klebstofffilms durch einfaches Verstauben stehen einer gewerblichen Anwendung entgegen, wenn die Klebstoffverbindung eine Mindestfestigkeit haben soll.

Zusammenfassend lässt sich feststellen, dass Klebstoffe, die dauerhaft feste Verbindungen herstellen sollen, entweder erst im unmittelbaren Zusammenhang mit dem Fügen der Verbindung aufgetragen werden oder des Zusatzes einer zweiten Komponente oder der Anwendung von hohem Druck und/oder hoher Temperatur bedürfen. Ein Klebstoff, der auf zu verleimende Elemente aufgetragen werden kann, und der in zeitlichem Abstand zum Auftragen ohne Zusatz einer zweiten Komponente oder Anwendung von hohem Druck und/oder hoher Temperatur eine feste, dauerhafte Verbindung ergibt, ist nicht bekannt.

Soweit im Folgenden von Klebstoff die Rede ist, werden darunter alle Arten von Klebern, Klebstoffen und dergleichen, seien sie auf der Basis von Naturstoffen oder synthetisch hergestellt, verstanden, die zum Aufbau einer Klebverbindung geeignet sind und die als Ein-Komponenten-Klebstoffe keine zweite Substanz zum Aktivieren des Klebstoffs erfordern.

Es ist Aufgabe der Erfindung, ein Holzwerkstoff-Paneel vorzuschlagen, das einfach zu verleimen ist. Es ist weiter Aufgabe der Erfindung, ein Verfahren zur Herstellung eines solchen Holzwerkstoff-Paneels und eine einfach ausführbare Klebverbindung vorzuschlagen.

Das erfindungsgemäße Verfahren betrifft die Herstellung eines beleimten Holzwerkstoff-Paneels, das mit einem weiteren gleichartig beleimten Holzwerkstoff-Paneels verklebt werden kann, mit den Schritten:
- Auftragen eines Ein-Kompontenten-Klebstoffs auf mindestens einen Oberflächen-Abschnitt des Holzwerkstoff-Paneels und
- Reduzieren des Flüssigkeitsgehalts des aufgetragenen Ein-Komponenten-Klebstoffs bis zur Ausgleichsfeuchte.

Erfindungsgemäß handelt es sich um einen Ein-Komponenten-Klebstoff, der vorzugsweise in Form einer Dispersion aufgetragen, dessen Flüssigkeitsgehalt aber nach dem Auftragen bis zur Ausgleichsfeuchte reduziert wird. Der so auf der Oberfläche des beleimten Holzwerkstoff-Paneels entstehende, trockene Klebstofffilm kann sich zwar noch etwas klebrig anfühlen, bildet aber einen Film, der keine überschüssige Flüssigkeit mehr enthält. Der Klebstofffilm ist bei Raumtemperatur im wesentlichen blockfrei und damit unempfindlich gegen z. B. Staubeinwirkung. Das so mindestens teilweise beleimte Holzwerkstoff-Paneel kann manipuliert werden, z. B. konfektioniert, verpackt oder anderweitig verarbeitet, ohne dass sich der beleimte Abschnitt störend auswirkt, oder dass die Klebkraft des getrockneten Klebstofffilms beeinträchtigt wird.

Eine Klebstoffverbindung entsteht dadurch, dass zwei dieser Klebstoffilme - und damit die entsprechend beleimten Elemente - zusammengefügt werden. Dabei ist keine Zeitspanne mit Anwendung von erhöhtem Druck und/oder erhöhter Temperatur erforderlich. Allenfalls ist beim Zusammenfügen der Elemente eine ohne weiteres von Hand aufzubringende Kraft erforderlich, um eine (nachstehend näher beschriebene) Haftreibung der Klebstofffilme zu überwinden. Es liegt auf der Hand, dass dieses Verfahren das Herstellen einer Klebstoffverbindung ermöglicht, die zeitlich und räumlich unabhängig vom Auftrag des Klebstoffs erfolgen kann. Sie ist damit besonders geeignet für werksseitig vorbeleimte Elemente, die dann vom Verbraucher an einem gewünschten Montageort zusammengefügt werden können.

Die Eigenschaften der Klebstoff-Verbindung, insbesondere die Festigkeit der Verbindung zwischen zwei beleimten und später miteinander verbundenen Elementen kann unter anderem durch die Wahl der geeigneten Filmhärte optimiert werden, die der Klebstoff nach dem Auftragen ausbildet. Eine Filmhärte, die gemäß den Vorgaben der DIN 53157 mit einer Pendelhärte nach König von ca. 10 - ca. 80 Oszillations-Pendelausschlägen gemessen wird, vorzugsweise mit einer Filmhärte von ca. 20 - ca. 40 Pendelausschlägen, besonders bevorzugt mit einer Filmhärte von ca. 25 - ca. 35 Pendelausschlägen hat sich als geeignet erwiesen, um die gewünschte Festigkeit der Klebstoff-Verbindung aufzubauen.

Es ist dem Fachmann geläufig, dass Viskosität, Filmhärte, Glasübergangstemperatur, Feststoffgehalt, Verarbeitungsbedingungen und die weiteren im Rahmen dieser Anmeldung angesprochenen Klebstoffeigenschaften weitgehend unabhängig voneinander eingestellt werden können, z. B. durch Auswahl und Kombination der geeigneten Rohstoffe und Additive.

Der auf das Element aufgetragene Klebstoff hat vorzugsweise eine Glasübergangstemperatur von 0 °C bis 30 °C, bevorzugt von ca. 10 °C bis ca. 20 °C. Es hat sich herausgestellt, dass ein solcher Klebstoff, nachdem er aufgetragen und getrocknet ist, auch noch in großem zeitlichen Abstand eine feste Klebstoffverbindung aufbaut, wenn dieser Klebstofffilm mit einem zweiten, gleichartigen Klebstofffilm zusammengefügt wird.

Weiter hat es sich als vorteilhaft erwiesen, wenn der aufgetragene Klebstoff eine Reißdehnung von ca. 200 % bis ca. 1200 % aufweist, vorteilhaft von ca. 300 % bis ca. 1000 %, besonders bevorzugt von ca. 400 % bis ca. 900 %. Damit wird das gewünschte Niveau an Scher- bzw. Zugfestigkeit erreicht

Bevorzugt werden für das erfindungsgemäße Verfahren Ein-Komponenten-Klebstoffe eingesetzt, die aus einer Gruppe ausgewählt werden, die umfasst: Polyacrylate, Polyurethane und Polyvinylacetate, besonders bevorzugt Polyvinyl-Ethylen-Copolymere. Der Ein-Komponenten-Klebstoff kann auch aus einer Mischung der vorgenannten Substanzen bestehen.

Der zur Durchführung des Verfahrens bzw. zum Auftragen auf das Element eingesetzte Klebstoff wird in der Regel als Dispersion, vorzugsweise als wässrige Dispersion eingesetzt. Dadurch ist die Vermeidung von organischen Lösungsmitteln beim Auftragen gewährleistet. Das Ausdünsten von organischen Lösungsmitteln beim späteren Fügen des beleimten Elements ist damit auch ausgeschlossen.

Da der verwendete Klebstoff auf dem mindestens abschnittsweise beleimten Element getrocknet wird, sollte der aufgetragene Ein-Komponenten-Klebstoff einen möglichst hohen Feststoffgehalt aufweisen, um ein Minimum an Flüssigkeit während des Trocknens entfernen zu müssen. Der Ein-Komponenten-Klebstoff weist deshalb vorteilhaft einen Feststoff-Gehalt von mindestens ca. 30 Gewichts-Prozent (Gew.-%) auf, vorzugsweise über ca. 40 Gew.-%, besonders bevorzugt über ca. 45 Gew.-%.

Die Viskosität des Klebstoffs ist zum einen für die Rheologie und damit z. B. für die Verarbeitung des Ein-Komponenten-Klebstoffs wichtig. Zum anderen können durch die Viskosität auch Eigenschaften der späteren Klebstoffverbindung beeinflusst werden. Bevorzugt wird ein Ein-Komponenten-Klebstoff mit einer Viskosität von mindestens ca. 2000 mPas, vorzugsweise von mindestens ca. 3.000 mPas, besonders bevorzugt von mindestens ca. 6000 mPas, vorteilhaft von über 8000 mPas.

Die Auftragsmenge des Ein-Komponenten-Klebstoffs kann in weiten Bereichen variieren. Es ist zu erwarten, dass ein Klebstoffauftrag von bis zu ca. 250 g/m² die wirtschaftliche Obergrenze der Anwendung des Verfahrens darstellt. Üblich ist ein Klebstoffauftrag bis zu ca. 150 g/m², bevorzugt ist natürlich ein sparsamer Klebstoffauftrag, so dass die bevorzugte Auftragsmenge zwischen ca. 80 g/m² und ca. 120 g/m² liegt.

Der Ein-Komponenten-Klebstoff ist -je nach Einsatzbedingungen der fertigen Verleimung- mit Mitteln zum Einstellen der Viskosität versehen. Insbesondere Dispergierhilfsmittel, Netzmittel, Entschäumer, Verdicker oder Stabilisatoren oder auch eine Mischung der vorgenannten Mittel dienen dazu, die für die Verarbeitung oder die spätere Klebstoffverbindung gewünschte Rheologie einzustellen und bis zur Verarbeitung des Ein-Komponenten-Klebstoffs aufrecht zu erhalten. Die Einstellung der Rheologie ist eine an sich übliche Maßnahme. Es wird bevorzugt, wenn die Klebstoff-Dispersion eine scherunabhängige Viskosität aufweist, so dass die Viskosität sich während der Verarbeitung nicht ändert.

Weiter gehören zu den wahlweise zugesetzten Additiven Mittel zum Verhindern oder Verzögern der Oxidation der Klebstoffe bzw. der Klebstoff-Bestandteile. Diese an sich bekannten Oxidationsinhibitoren verlängern bei den hier in Rede stehenden Klebstoffen den Zeitraum, in der der aufgetragene und getrocknete Klebstofffilm im Kontakt mit einem gleichartigen Film eine Klebstoffverbindung aufbaut.

Weiter kann der auf das zu beleimende Element aufgetragene Ein-Komponenten-Klebstoff Bakterizide und/oder Fungizide enthalten, beispielsweise um die Klebstoffverbindung in Feuchträumen oder in Außenbereichen zu stabilisieren.

Es wird als besonderer Vorteil der Erfindung angesehen, dass der für die Beleimung des Elements verwendete Klebstoff eine Verarbeitungstemperatur von ca. 10 °C, besonders bevorzugt von ca. 15 °C bis ca. 30 °C hat. Eine Klimatisierung der Umgebung, in der der Klebstoff aufgetragen wird, ist deshalb nicht erforderlich.

Das Trocknen des Klebstoffs auf dem mindestens teilweise beleimten Element erfolgt üblicherweise so, dass der Flüssigkeits- bzw. Lösungsmittelgehalt der Ein-Komponenten-Klebstoff-Dispersion bis zur Ausgleichsfeuchte reduziert wird. Die Ausgleichsfeuchte ist der Feuchtigkeitsgehalt im Klebstoff, der sich bei dem herrschenden Umgebungsklima, also in Abhängigkeit von Temperatur und Luftfeuchtigkeit einstellt. Der Wassergehalt wird vorzugsweise dadurch reduziert, dass der Klebstoff auf ein hygroskopisches Material, insbesondere Holzwerkstoffe, aufgetragen wird, das überschüssiges Wasser aufsaugt. Häufig wird das Reduzieren des Feuchtigkeitsgehalts auch durch Trocknen des Klebstoffs bis zum Erreichen der Ausgleichsfeuchte beschleunigt. Dies kann entweder durch Wärmezufuhr oder durch Belüften geschehen. Es können auch beide Maßnahmen kombiniert werden. Das Beschleunigen des Trocknungsvorgangs kann vor allem dann erforderlich sein, wenn das Material bzw. die Oberfläche, auf dem der Klebstoff aufgetragen wird, nicht oder nicht ausreichend hygroskopisch ist

Aus Gründen der Wirtschaftlichkeit kann das Trocknen der mindestens teilweise beleimten Oberfläche geschehen, während das Element an den nicht beleimten Abschnitten weiter bearbeitet, konfektioniert und /oder während das Element verpackt wird. Da der Trocknungsvorgang, insbesondere bei hohen Feststoffgehalten des Klebstoffs schnell durchgeführt werden kann, liegt hier ein besonderer Kostenvorteil des erfindungsgemäßen Verfahrens.

Überraschenderweise hat sich herausgestellt, dass die Oberfläche des Klebstofffilms in einigen Fällen nach dem Trocknen eine außerordentlich hohe Haftreibung aufweist. Kommen die beiden Oberflächen der Klebstofffilme, die die beiden Elemente verbinden sollen, zur Anlage, dann bewirkt diese hohe Haftreibung unverzüglich, dass eine Trennung der beiden Elemente durch paralleles Verschieben, z. B. beim Auseinanderziehen, nur unter einem gewissen, in der Regel aber noch manuell aufzubringenden Kraftaufwand erfolgen kann. Die Haftreibung beträgt vorzugsweise mindestens ca. 1 N/mm², vorzugsweise über ca. 2 N/mm², besonders bevorzugt über ca. 4 N/mm².

Die Klebstoff-Verbindung entsteht durch das Zusammenfügen von zwei mit einem jeweils gleichartigen, bis zur Ausgleichsfeuchte getrockneten Klebstofffilm beschichteten Elementen, wobei nach ca. 48 Stunden, vorzugsweise nach ca. 24 Stunden, besonders bevorzugt nach ca. 12 Stunden die beiden Klebstofffilme nicht mehr als Filme, die den einzelnen Elementen zuzuordnen sind, voneinander abgegrenzt werden können. Die beiden Klebstofffilme sind nach dem vorgenannten Zeitraum durch Ineinanderfließen zu einer einheitlichen Klebstoffschicht zwischen den zu verbindenden Elementen verschmolzen.

Nach einer bevorzugten Ausführungsform der Erfindung entsteht die Klebstoff-Verbindung zunächst dadurch, dass zwei aneinander anliegende Klebstofffilme eine gewisse Haftreibung auf einander ausüben, etwa im Rahmen der vorgenannten Werte. Diese Haftreibung, die für eine erste Fixierung der Elemente zueinander völlig ausreicht, wird später überlagert und gesteigert durch den Aufbau der einheitlichen Klebstoffschicht. Die Festigkeit der Klebstoffschicht beträgt vorzugsweise mindestens ca. 1,5 N/mm², vorteilhaft mindestens ca. 2,5 N/mm², besonders bevorzugt mindestens ca. 4 N/mm². Die Klebstoffschicht entsteht bevorzugt durch ein Ineinanderfließen der beiden aneinander anliegenden Klebstofffilme, wobei hier zu berücksichtigen ist, dass es sich um Produkte mit verhältnismäßig hoher Viskosität handelt, die erst nach einiger Zeit eine völlig homogene Schicht ausbilden. Allerdings wird schon beim Ineinanderfließen der Oberflächen der Klebstofffilme eine beträchtliche Festigkeit der Klebstoffverbindung aufgebaut.

Besonders bevorzugt wird ein Ein-Komponenten-Klebstoff, der bereits ca. 5 Minuten nach dem Zusammenfügen zweier zu verbindender Elemente mindestens ca. 30 %, vorteilhaft mindestens ca. 40 %, besonders bevorzugt ca. 50 % der maximal zu erreichenden Festigkeit der Klebstoff-Verbindung aufgebaut hat.

Bevorzugt wird ein Klebstoff verwendet, dessen Eigenschaften, insbesondere dessen Rheologie so eingestellt sind, dass die Klebkraft des Ein-Komponenten-Klebstoffs - bezogen auf die Ausgangs-Klebkraft unmittelbar nach dem Auftragen und Trocknen - allenfalls um ca. 20 % verringert wird, wenn das mit einem getrockneten Klebstofffilm versehene Element über einen Zeitraum von bis zu drei Monaten bei einem Feuchtegehalt von mindestens 6 Gewichts-% bei Temperaturen von ca. -20°C bis ca. +50°C gelagert wird.

Als besonders anwendungsfreundlich hat sich zum Auftragen auf die zu fügenden Elemente ein Klebstoff erwiesen, dessen Klebkraft -bezogen auf die Klebkraft unmittelbar nach dem Auftragen und Trocknen- allenfalls um bis zu ca. 60 %, vorzugsweise um bis zu 40 %, besonders bevorzugt um bis zu 20 % verringert wird, wenn das mit einem getrockneten Klebstofffilm versehene Element über einen Zeitraum von bis zu drei Monaten bei einer Luftfeuchtigkeit von ca. 5% bis ca. 95% gelagert wird.

In der Anwendung hat sich ein Ein-Komponenten-Klebstoff als besonders brauchbar erwiesen, der eine wasserfeste Klebstoff-Verbindung aufbaut. Es erweist sich bereits als vorteilhaft, wenn der wasserfeste Klebstoff unterhalb der Oberseite z. B. an einer Nut-Federverbindung aufgetragen ist, da so ein Eindringen unter bzw. hinter wasserempfindliche Werkstoffe insbesondere Holzwerkstoff-Paneele vermieden wird. Bevorzugt wird jedoch, wenn der Klebstoff unmittelbar im Bereich der Oberfläche aufgetragen ist. Dadurch wird z. B. ein Eindringen von Wasser in die mittlere Schicht der Holzwerkstoffe unterhalb der Oberfläche und damit ein unerwünschtes Quellen der Holzwerkstoffe vermieden.

Der Aufbau der Klebstoff-Verbindung und das Festigkeitsniveau der Klebstoff-Verbindung können verbessert werden, wenn die zu verbindenden Elemente an den Kanten mit einem Profil versehen sind, das nach dem Zusammenfügen einen gewissen Druck auf die Klebstoff-Verbindung bewirkt. Beispielsweise bietet sich ein Nut- und -Feder-Profil an, dessen Feder nach dem Zusammenfügen kraftschlüssig in der Nut des korrespondierenden Elements aufgenommen ist. Zur Verbesserung des Festigkeitsniveaus genügt dabei schon ein verhältnismäßig geringer Druck von mindestens 0,1 N/mm², bevorzugt von 0,8 N/mm² bis 2 N/mm², maximal von 5 N/mm². Ein höherer Druck ist nicht angebracht, wenn die profilierten Elemente von Hand zusammengefügt werden sollen, da ein zu hoher Druck aufzubringen ist.

Eine besonders geeignete Anwendung des vorstehend geschilderten Verfahrens ist die werksseitige Beleimung von Holzwerkstoff-Paneelen. Die nachstehenden Ausführungen werden als Beschreibung einer eigenständigen erfinderischen Leistung angesehen, die für sich genommen Schutz beanspruchen darf.

Holzwerkstoff-Paneele sind flächige Produkte, die nach ihrem Gebrauchszweck dazu bestimmt sind, zu einem Verbund zusammengefügt zu werden. Typische Einsatzbereiche sind Fußboden-, Wand- oder Deckenpaneele. Die Paneele weisen allgemein eine Oberfläche, die sowohl technischen als auch dekorativen Ansprüchen genügt, eine Unterseite und Kanten auf. Meist sind die Kanten werksseitig dazu präpariert, dass die einzelnen Paneele beim Zusammenfügen form- und/oder kraftschlüssig miteinander verbunden werden können. Überwiegend werden heute Paneele aus Holzwerkstoffen angeboten, doch im Einzelfall werden auch Massivholz-Paneele angeboten. Da die Produkte ähnlich zu verarbeiten sind, wird im Folgenden unter dem Begriff "Holzwerkstoffe" stets auch "Massivholz" verstanden. Ebenso fallen auch mineralisch gebundene Span- bzw. Faserplatten unter den Oberbegriff der Holzwerkstoffe.

Bekannte Verbindungen basieren entweder auf rein mechanischen Steck-, Klemm- oder Rastverbindungen, ggf. mit Einsatz von separaten Verbindungsmitteln. Alternativ sind Verbindungen bekannt, bei denen Klebstoff eingesetzt wird, der entweder bauseitig bei der Herstellung des Verbunds aufgetragen wird oder der werksseitig bei der Konfektionierung der Paneele aufgebracht wird.

Bekannt sind Klebstoffe, die in einem inaktiven Zustand aufgetragen werden, und die dann vor dem oder beim Zusammenfügen der Paneele aktiviert werden, damit sie reagieren und die gewünschte, feste Verbindung zwischen zwei Paneelen aufbauen. Sie entsprechen damit der zweiten Gruppe der eingangs beschriebenen Klebstoffe.

Der werksseitige Klebstoffauftrag wird beispielsweise beschrieben in der deutschen Gebrauchsmuster-Schrift DE 297 03 962 der WITEX AG. Dort wird das werksseitige Auftragen eines Kontaktklebstoffs vorbeschrieben, der auf ein Nut-Feder-Profil aufgetragen wird. Der Klebstoff wird auf das Profil aufgetragen und durch Druck oder Wärme aktiviert. Ein Beispiel für einen geeigneten Klebstoff ist nicht gegeben, so dass die Ausführbarkeit der Lehre bei der WITEX-Veröffentlichung nicht gegeben ist.

Das Aufbringen eines Zwei-Komponenten-Klebstoffs auf profilierte Kanten eines Paneels und das Aktivieren der beiden Komponenten, also das Überführen von einem passiven in einen aktiven Zustand, beschreibt die WO 01/94721 der M. Kaindl Holzindustrie. Nach der Beschreibung von Kaindl wird der Klebstoff bauseitig durch Zugabe von Wasser, beispielsweise durch Aufstreichen von Wasser aktiviert. In der WO 02/063114 der Fritz Egger GmbH & Co. wird erläutert, dass das Aufbringen von Klebstoff, der in Mikrokapseln eingeschlossen ist, werksseitig vorgenommen wird. Beim Zusammenfügen der Paneele werden die Mikrokapseln zerstört und so der Klebstoff aktiviert.

Das Aktivieren des Klebstoffs ist entweder mit aufwändigen Maßnahmen verbunden, die zunächst einmal sicherstellen, dass der Klebstoff in einem inaktiven Zustand bleibt. So ist das Herstellen und die Verarbeitung von Mikrokapseln nicht nur aufwändig und teuer sondern in der Praxis auch noch nicht zufriedenstellend gelöst. Oder aber das Aktivieren ist eine mögliche Fehlerquelle, insbesondere dann, wenn Flüssigkeit zum Aktivieren erforderlich ist. Holzwerkstoffe sind empfindlich gegen Wasser, das das Material zum Quellen bringt und organische Lösungsmittel sind für die Verarbeiter nicht ohne Risiko. Das richtige Maß an Flüssigkeit zu finden ist beim Aktiveren mit Wasser nicht einfach. Die Neigung des Verbrauchers, der diese Produkte oft selbst verlegt, geht dahin, zuviel Lösungsmittel zu verwenden. Es wird also zuviel Wasser aufgetragen mit dem Risiko, dass die Kantenbereiche der Paneele durchfeuchten und quellen.

Es ist daher weiter Aufgabe der Erfindung, einfach zu fügende Holzwerkstoff-Paneele und ein Verfahren zu deren Herstellung vorzuschlagen.

Nachdem die Aktivierung von Klebstoff mit den vorgenannten Schwierigkeiten behaftet ist, hat sich herausgestellt, dass ein Ein-Komponenten-Klebstoff für die werksseitige Herrichtung von Paneelen besonders geeignet ist. Zu den Eigenschaften des Ein-Komponenten-Klebstoffs sowie zum Verfahren des Auftragens und Trocknens des Klebstoffs wird auf die vorstehenden Ausführungen verwiesen, die ohne weiteres für das Beleimen und Verarbeiten von Holzwerkstoffen anwendbar sind.

Der Klebstoff wird mindestens abschnittsweise aufgetragen. Die Menge bzw. die zu verleimende Oberfläche an den Kanten ergibt sich in einfacher Weise aus der gewünschten Haftkraft bzw. Zugfestigkeit, die die Klebstoffverbindung aufweisen soll und dem Festigkeitspotential des Klebstoffs. Gegebenenfalls ist noch die Form der beleimten Abschnitte der zu verbindenden Paneele zu berücksichtigen. Dabei ist in der Regel die Vorgabe zu beachten, dass nach dem vollen Ausbilden der Klebkraft die beiden verleimten Paneele unter Zug-, Scher- oder Biegelast nicht in der Klebstofffuge brechen sollen sondern im Holzwerkstoff.

Die Kanten können im einfachsten Fall als gerade Seitenflächen des Holzwerkstoff-Paneels ausgebildet sein. Bevorzugt wird jedoch eine Profilierung der Kanten, beispielsweise ein einfaches Ausklinken oder ein Nut-Feder-Profil. Die Profilierung bewirkt, dass nicht einfach senkrechte Flächen aneinander anliegen, denn es werden zwischen Oberseite und Unterseite geneigte oder ebene Flächen geschaffen, die nicht an die Oberseite des Paneels angrenzen.

Werden diese Flächen mit Klebstoff beaufschlagt, verringert sich das Risiko, dass beim Fügen der Paneele Klebstoff zur Oberseite des Paneels hin gedrängt wird und die Oberseite des Paneels durch austretenden Klebstoff optisch beeinträchtigt wird. Zudem können die profilierten Kanten den schnellen Aufbau der Zugfestigkeit dadurch unterstützen, dass die Klebstoffschichten beim Fügen der Paneele in besonders guten und vollständigen Kontakt miteinander gebracht werden. Es kann sich als vorteilhaft erweisen, dass profilierte Kanten größere Anlageflächen aufweisen, die zum Auftragen des Klebstoffs zur Verfügung stehen, doch ist dies bei Klebstoffen mit hohem Festigkeitspotential nicht immer erforderlich.

Nach einer vorteilhaften Ausgestaltung des Verfahrens wird der Klebstoff in wässriger Phase aufgetragen. Das ermöglicht eine breite Form von an sich bekannten Auftragsvarianten vom Spritzen über Düsen, Streichen, Tauchen oder Walzen.

Der Feuchtigkeitsgehalt des Klebstoffs wird nach dem Auftragen bis zur Ausgleichsfeuchte reduziert. Nach dem Erreichen der Ausgleichsfeuchte liegt eine bei Berührung allenfalls schwach haftend wirkende, trockene Klebstoffschicht vor, die beim Manipulieren des Paneels nicht hinderlich ist. Besonders bevorzugt wird ein Trocknen, das in der Verpackung der Paneele, also ohne gesonderte Trocknungsvorgänge oder Trocknungslager durchgeführt wird. Es liegt auf der Hand, dass ein Überführen der beleimten Paneele unmittelbar in eine verkaufsfertige Verpackung ohne zwischengeschaltete Trocknungsvorgänge, z. B. mittels Heißluft-Düsen besonders wirtschaftlich ist.

Hinsichtlich der Verlegeeigenschaften ist sowohl für Holz bzw. Holzwerkstoffe als auch für andere Werkstoffe ein Klebstoff zu bevorzugen, der möglichst schnell eine Haftkraft bzw. Haftreibung oder Zugfestigkeit ausbildet, die ein Benutzen der verlegten Paneele ermöglicht. Wichtig ist dies zum Beispiel beim Begehen einer Fußbodenfläche, die aus Paneelen gefügt wird. Ein Klebstoff, der ca. 5 Minuten nach dem Fügen zweier Paneele bzw. zweiter Klebstoffschichten ca. 30 %, vorteilhaft ca. 50 %, besonders bevorzugt ca. 70 % der maximalen Festigkeit erreicht, hat sich als besonders geeignet erwiesen. Die Festigkeit, die nach ca. 5 Minuten erreicht wird, sollte das Begehen der Fußbodenfläche erlauben.

Es wird als eigenständiger erfinderischer Beitrag zur Erfindung angesehen, dass das beleimte Element nach Anspruch i, das mit profilierten, mindestens abschnittsweise mit Klebstoff versehenen Kanten versehen ist, zusätzlich mit mechanischen Auszieh-Widerständen, insbesondere mit Widerhaken oder mit formschlüssig ausgearbeiteten Profilabschnitten versehen ist.

Um unmittelbar nach dem Zusammenfügen, vor dem Ausbilden der maximalen Klebkraft der Klebstoff-Verbindung bereits eine möglichst hohe Belastung der Klebstoff-Verbindung gewährleisten zu können, wird vorgeschlagen, mechanische Auszieh-Widerstände in die Nut oder auf der Feder einzuarbeiten.

Diese mechanischen Auszieh-Widerstände können als Stifte, Scheiben oder Bänder, vorzugsweise aus Metall aber auch aus Kunststoff ausgebildet sein. Sie sind vorzugsweise in die Richtung geneigt, in die die Feder beim Einführen in die Nut, also beim Fügen der Elemente, bewegt wird. Wird durch Belastung unmittelbar nach dem Fügen eine Kraft auf Nut und Feder ausgeübt, die ein Auseinandergleiten der Verbindung bewirkt, so stehen die mechanischen Auszieh-Widerstände einer solchen Bewegung entgegen. Die Auszieh-Widerstände können weitaus schwächer dimensioniert sein als übliche Verriegelungsmittel, da die erfindungsgemäße Klebstoff-Verbindung bereits unmittelbar nach dem Fügen über eine hohe Haftreibung verfügt.

Nach einer besonders vorteilhaften Ausführungsform ist ein Auszieh-Widerstand als formschlüssiger Profilabschnitt ausgebildet. Bevorzugt weist dieser Profilabschnitt mindestens eine Ausnehmung und einen korrespondierenden Vorsprung auf, deren Eingriffhöhe die Schichtdicke des Klebstoff-Auftrags, üblicherweise 0,05 mm bis 0,3 mm, vorzugsweise 0,1 bis 0,2 mm, jedoch nicht übersteigt.

Es ist ersichtlich, dass ein so klein dimensioniertes Profil nicht geeignet ist, einer vollen auf Auseinanderziehen des Profils gerichteten Kraft zu widerstehen. Das derart klein dimensionierte, die Schichtdicke des Klebstoff-Auftrags nicht übersteigende Profil ist jedoch geeignet, die Festigkeitsdifferenz zu schließen, die zwischen dem anfänglichen Auszieh-Widerstand der Klebstoff-Verbindung und dem gewünschten Auszieh-Widerstand besteht Ist kein Klebstoff aufgetragen und werden die Elemente mit Nut und Feder gefügt, kommt das klein dimensionierte Profil zwischen Nut und Feder nicht in Eingriff.

Ein Ausführungsbeispiel erläutert am Beispiel der Figuren Details der Erfindung. Es zeigt:
- Fig. 1: eine erste Ausführungsform der Erfindung
- Fig. 2: eine zweite Ausführungsform der Erfindung mit Auszieh-Widerstand
- Fig. 3: eine dritte Ausfiihrungsform der Erfindung mit Auszieh-Widerstand

Eine mittel dichte Faserplatte (MDF-Platte) wird in Paneele 2, 4 aufgetrennt Die Paneele 2, 4 weisen jeweils eine laminierte Dekor-Oberseite 6 und eine mit einem Gegenzug 8 versehene Unterseite 10 auf. Die Kanten 12, 14 werden jeweils mit einer Nut 16 oder einer mit der Nut 16 korrespondierenden Feder 18 versehen. Ein Paneel 2 weist an einer ersten Kante 12 eine Nut 16 und an einer zweiten Kante 14, die parallel zu der ersten Kante 12 verläuft, eine mit der Nut 16 korrespondierende Feder 18 auf. Dadurch können mehrere Paneele 2, 4 miteinander zu einer Fläche verbunden werden.

Die Nut 16 weist zwei etwa parallele Fläche 20, 22 auf, die sich von einem Nutgrund 24 bis zur Kante 12 erstrecken. Auf die parallelen Flächen 20, 22 ist eine Klebstoffschicht 26 aufgetragen. Die Feder 18 weist zwei etwa parallele Flächen 28, 30 auf, die sich von der Kante 14 bis zu einem Federende 32 erstrecken. Die Feder 18 ist so bemessen, dass sie beim Zusammenfügen der Paneele 2, 4 formschlüssig in die Nut 16 eingreift. Die Flächen 28, 30 der Feder 18 sind mit einer Klebstoffschicht 34 versehen.

Die Paneele 2,4 mit den beleimten Flächen 20, 22, 28, 30 werden so ausgerichtet, dass Nut 16 und Feder 18 einander gegenüberliegen. Die Paneele 2,4 werden dann ineinander gefügt, so dass die Flächen 20, 28 und 22, 30 aneinander anliegen. Dadurch kommen die Klebstoffschichten 26 und 34 ebenfalls zur Anlage aneinander.

Zur Durchführung des erfindungsgemäßen Verfahrens wird eine handelsübliche, wässrige Dispersion eines Polyvinylacetats Ethylen Copolymer (PVA cE) verwendet. Diese Dispersion wird mit einem Feststoff-Gehalt von 50 Gew.-% eingesetzt. Weiter sind 1 Gew.-% eines Verdickungsmittels, jeweils 0,5 Gew.-% eines Biozids und eines Entschäumers eingesetzt. Schließlich enthält die aufzutragende Dispersion 1 Gew.-& eines Oxidations-Stabilisators. Der Wassergehalt der Dispersion beträgt 47 Gew.-%. Die Dispersion weist eine Glasübergangstemperatur Tg von 17 °C und eine Reißdehnung von ca. 700 % auf.

Die Dispersion wird bei Raumtemperatur auf die Flächen 20, 22, 28, 30 aufgesprüht. Der Klebstoff-Auftrag liegt bei ca. 150 g/m². Die beleimten Flächen 20, 22, 28, 30 werden an Heißluft-Düsen vorbeigeführt, die den Klebstofffilm in wenigen Minuten auf Ausgleichsfeuchte getrocknet. Glasübergangstemperatur und Reißdehnung sind für den getrockneten Klebstofffilm unverändert dieselben wie für die Dispersion.

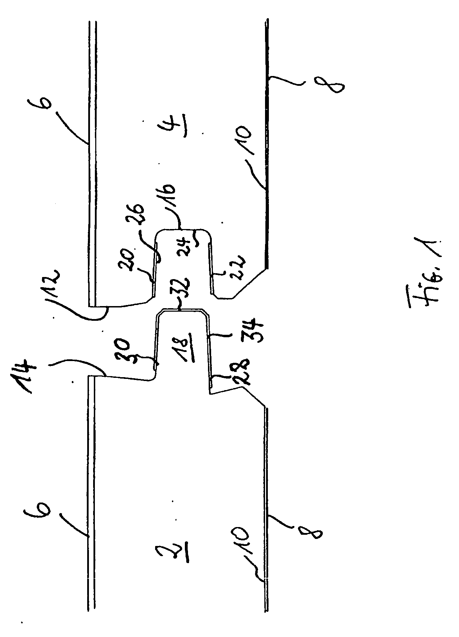

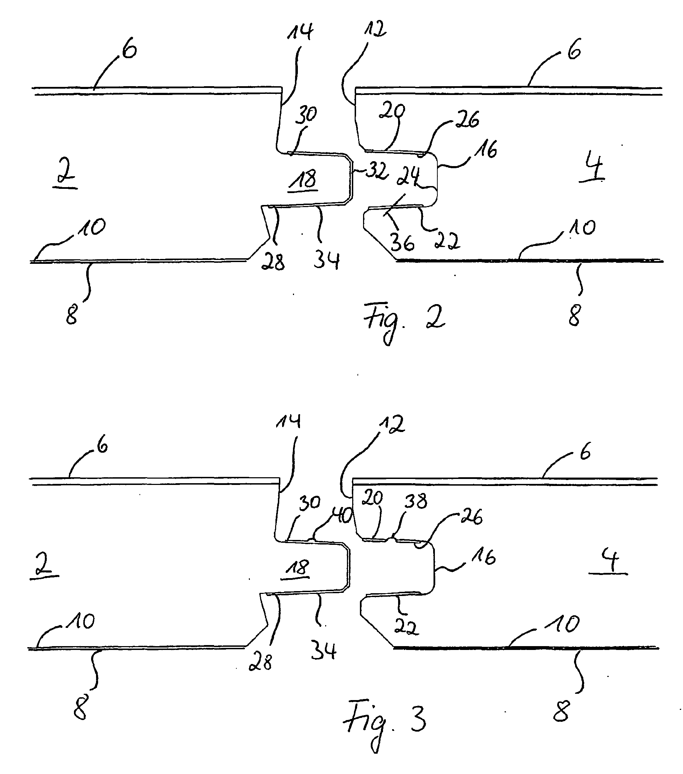

Fig. 2 zeigt die Randbereiche von zwei Paneelen 2, 4. Die Kante 12 des Paneels 2 ist mit einer Nut 16 versehen, die Kante 14 des Paneels 4 ist mit einer Feder 18 versehen. Nut 16 und Feder 18 sind abschnittsweise beleimt. Die Stärke des Klebstoff-Auftrags beträgt 0,1 mm. In beleimtem Zustand greifen Nut 16 und Feder 18 kraftschlüssig ineinander ein. In die untere Wange der Nut ist ein Auszieh-Widerstand, hier ein Drahtstift 36, eingebracht, der die untere Fläche 22 der Nut 16 durchsetzt. Der Drahtstift 36 ist geneigt. Die Neigung des Drahtstifts 36 weist in Richtung der Bewegung der Feder 18, wenn diese in die Nut 16 eingefügt wird.

Beim Fügen der Paneele 2, 4 dringt der Drahtstift 36 nicht notwendigerweise in die Feder 18 ein. Wird allerdings eine Kraft auf die Paneele 2, 4 ausgeübt, die ein Herausziehen der Feder 18 aus der Nut 16 zur Folge hat, so steht zum einen dem die Haftreibung des Klebstoffs entgegen, die schon unmittelbar nach dem Fügen gegeben ist. Zum anderen dringt in dieser Belastungsrichtung der Drahtstift 36 in die Feder 18 ein und verhindert ein Auseinanderziehen der Paneele 2,4.

Fig. 3 zeigt eine alternative Ausführungsform eines Profils mit Auszieh-Widerstand. Die Paneele 2, 4 sind im wesentlichen so gestaltet wie in Fig. 1 und 2 dargelegt. Abweichend von den vorbeschriebenen Ausführungen ist kein Drahtstift 36 als Auszieh-Widerstand vorgesehen. Vielmehr ist in die obere Fläche 20 der Nut 16 eine Ausnehmung 38 eingearbeitet, die der halben Stärke des Klebstoff-Auftrags entspricht, also 0,05 mm. Auf der korrespondierenden Fläche der Feder 18, die nach dem Fügen an der Fläche 22 anliegt, ist ein Vorsprung 40 gleicher Höhe wie die Ausnehmung eingearbeitet. In Fig. 3 sind die Ausnehmung 38 und der Vorsprung 40 in stark vergrößerter Ausführung dargestellt, um das Prinzip des Auszieh-Widerstands deutlich zu machen.

Beim Fügen der Paneele 2, 4 greift der Vorsprung 40 in die Ausnehmung 38 ein, einfach dadurch, dass der Klebstofffilm verdrängt wird. Eine Auslenkung von Nut 16 oder Feder 18 ist nicht gegeben. Wird eine Kraft auf die Paneele 2, 4 ausgeübt, die ein Herausziehen der Feder 18 aus der Nut 16 zur Folge hat, so steht zum einen dem die Haftreibung des Klebstoffs entgegen, die schon unmittelbar nach dem Fügen gegeben ist. Zum anderen verhindert in dieser Belastungsrichtung der Eingriff von Ausnehmung 38 und Vorsprung 40 ein Auseinanderziehen der Paneele 2, 4.

## Patentansprüche

1. Holzwerkstoff-Paneel mit einer Oberfläche, auf die werksseitig zum Herstellen einer Klebverbindung mindestens abschnittsweise ein Ein-Komponenten-Klebstoff aufgetragen ist, dessen Feuchtigkeitsgehalt nach dem Auftragen bis zur Ausgleichsfeuchte reduziert ist und der nach dem Erreichen der Ausgleichsfeuchte blockfrei ist.

2. Holzwerkstoff-Paneel nach Anspruch 1, **dadurch gekennzeichnet, dass** ein Ein-Komponenten-Klebstoff mit einer Glasübergangstemperatur von 0°C bis 30°C, vorzugsweise von 10°C bis 20°C aufgetragen ist.

3. Holzwerkstoff-Paneel nach Anspruch 1, **dadurch gekennzeichnet, dass** ein Ein-Komponenten-Klebstoff mit einer Reißdehnung von 200% bis 1200%, vorzugsweise von 300% bis 1000%, besonders bevorzugt von 400% bis 900% aufgetragen ist.

4. Holzwerkstoff-Paneel nach Anspruch 1, **dadurch gekennzeichnet, dass** ein Klebstoff zur Herstellung des beleimten Holzwerkstoff-Paneels (2, 4) eingesetzt wird, der eine Filmhärte von 10 bis 80 Pendelausschlägen, vorzugsweise von 20 bis 40 Pendelausschlägen, besonders bevorzugt von 25 bis 35 Pendelausschlägen nach DIN 53157 (Pendelhärte nach König) aufweist.

5. Holzwerkstoff-Paneel nach Anspruch 1, **dadurch gekennzeichnet, dass** der Ein-Komponenten-Klebstoff aus der Gruppe der Thermoplasten ausgewählt ist.

6. Holzwerkstoff-Paneel nach Anspruch 1, **dadurch gekennzeichnet, dass** der Ein-Komponenten-Klebstoff aus einer Gruppe ausgewählt wird, die umfasst: Polyacrylate, Polyurethane und Polyacetate, insbesondere Polyacetat-Ethylen-Copolymere, oder dass der Ein-Komponenten-Klebstoff Mischungen der Komponenten der vorgenannten Gruppe umfasst.

7. Holzwerkstoff-Paneel nach Anspruch 1, **dadurch gekennzeichnet, dass** der Ein-Komponenten-Klebstoff eine Viskosität von mindestens 2000 mPas, vorzugsweise von mehr als 3000 mPas, besonders bevorzugt von über 6000 mPas, vorteilhaft von über 8000 mPas aufweist.

8. Holzwerkstoff-Paneel nach Anspruch 1, **dadurch gekennzeichnet, dass** die Auftragsmenge des Ein-Komponenten-Klebstoffs bis zu 250 g/m², vorzugsweise bis zu 150 g/m², besonders bevorzugt 80 g/m² bis 120 g/m² beträgt.

9. Holzwerkstoff Paneel nach Anspruch i, **dadurch gekennzeichnet, dass** die Oberfläche des Ein-Komponenten-Klebstofffilms (26, 34) eine Haftreibung von mindestens 1 N/mm², vorzugsweise von mindestens 2 N/mm², besonders bevorzugt von 4 N/mm² aufweist.

10. Holzwerkstoff-Paneel nach Anspruch i, **dadurch gekennzeichnet, dass** ein Ein-Komponenten-Klebstoff aufgetragen wird, der nach dem Zusammenfügen von zwei korrespondierenden Klebstofffilmen (26, 34) eine Klebkraft von mindestens 1 N/mm², vorzugsweise von mindestens 2 N/mm², besonders bevorzugt von mehr als 4 N/mm² aufbaut.

11. Holzwerkstoff-Paneel nach Anspruch 1, **dadurch gekennzeichnet, dass** die maximale Klebkraft des jeweiligen Ein-Komponenten-Klebstoffs nach 48 Stunden, vorzugsweise nach 24 Stunden, besonders bevorzugt nach 12 Stunden erreicht ist.

12. Holzwerkstoff-Paneel nach Anspruch 1, **dadurch gekennzeichnet, dass** ein Ein-Komponenten-Klebstoff verwendet wird, dessen Klebkraft mindestens teilweise durch Ineinanderfließen der aneinander anliegenden Klebstofffilme (26, 34) aufgebaut ist.

13. Holzwerkstoff-Paneel nach Anspruch i, **dadurch gekennzeichnet, dass** ein Ein-Komponenten-Klebstoff ausgewählt ist, dessen Klebkraft, bezogen auf die unmittelbar nach dem Auftragen und Trocknen des Klebstofffilms (26, 34) erreichbare Festigkeit, um bis zu 20% verringert wird, wenn das mit einem getrockneten Klebstoffilm versehene Holzwerkstoff-Paneel über einen Zeitraum von bis zu drei Monaten bei einem Feuchtegehalt von mindestens 6 Gewichts-% bei Temperaturen von -20°C bis +50°C gelagert ist.

14. Holzwerkstoff-Paneel nach Anspruch i, **dadurch gekennzeichnet, dass** ein Ein-Komponenten-Klebstoff ausgewählt ist, dessen Klebkraft, bezogen auf die unmittelbar nach dem Auftragen und Trocknen des Klebstofffilms (26, 34) erreichbare Festigkeit, um bis zu 60%, vorzugsweise bis zu 40%, besonders bevorzugt bis zu 20% verringert wird, wenn das mit einem getrockneten Klebstofffilm versehene Holzwerkstoff-Paneel (2, 4) über einen Zeitraum von bis zu drei Monaten bei einer Luftfeuchtigkeit von 5% bis 95% gelagert ist.

15. Holzwerkstoff Paneel nach Anspruch i mit profilierten, mindestens abschnittsweise mit Klebstoff versehenen Kanten (12, 14), **dadurch gekennzeichnet, dass** eine profilierte Kante (12, 14) eines Holzwerkstoff-Paneels (2, 4) entweder mit einer Nut (16) oder mit einer Feder (18) versehen ist, die zum kraftschlüssigen Eingriff mit einer Feder (18) oder einer Nut (16) eines zweiten Holzwerkstoff-Paneels (2, 4) bestimmt ist.

16. Holzwerkstoff-Paneel nach Anspruch 15 mit mechanischem Auszieh-Widerstand, insbesondere mit Widerhaken (36) und/oder mit formschlüssig ausgearbeiteten Profilabschnitten (38, 40).

17. Holzwerkstoff-Paneel nach Anspruch 16 mit mechanischen Auszieh-Widerständen, die in die Nut (16) oder auf der Feder (18) eingearbeitet sind.

18. Holzwerkstoff-Paneel nach Anspruch 15 mit Auszieh-Widerständen, die als Stifte (36), Scheiben und/oder Bänder, insbesondere aus Metall oder Kunststoff, ausgebildet sind.

19. Holzwerkstoff-Paneel nach Anspruch 15, **dadurch gekennzeichnet, dass** die Stifte (36), Scheiben und/oder Bänder in die Nut (16) eingesetzt sind und in die Richtung geneigt sind, in die die Feder (18) beim Fügen der Holzwerkstoff Paneele (2, 4) bewegt wird.

20. Holzwerkstoff Paneel nach Anspruch 15, **dadurch gekennzeichnet, dass** formschlüssige Profilabschnitte, insbesondere Ausnehmungen (38) und korrespondierende Vorsprünge (40) ausgearbeitet sind, deren Höhe die Schichtdicke des Klebstoff-Auftrags (26, 34) nicht übersteigen.

21. Verfahren zur Herstellung eines beleimten Holzwerkstoff-Paneets (2, 4), das werksseitig zum Verkleben mit einem weiteren gleichartig beleimten Holzwerkstoff-Paneel (2, 4) hergerichtet ist, mit den Schritten:
- Auftragen eines blockfreien Ein-Komponenten-Klebstoffs auf mindestens einen Oberflächen-Abschnitt (20, 22, 28, 30) des Holzwerkstoff-Paneels (2, 4) und
- Reduzieren des Flüssigkeitsgehalts des aufgetragenen blockfreien Ein-Komponenten-Klebstoffs bis zur Ausgleichsfeuchte.

22. Verfahren nach Anspruch 21 zum Herstellen von Holzwerkstoff-Paneelen, die verlegefertig hergerichtet sind, mit einer Oberseite (6), einer Unterseite (10) und Kanten (12, 14), **dadurch gekennzeichnet, dass** auf mindestens zwei Kanten des Paneels mindestens abschnittsweise ein Ein-Komponenten-Klebstoff aufgetragen wird.

23. Verfahren nach Anspruch 21, **dadurch gekennzeichnet, dass** die Kanten (12, 14) von zu verbindenden Holzwerkstoff-Paneelen (2, 4) profiliert werden, insbesondere, dass die Profile der Kanten der zu verbindenden Holzwerkstoff-Paneele als kraftschlüssig zu verbindende, korrespondierende Profile ausgearbeitet werden.

24. Verfahren nach Anspruch 23, **dadurch gekennzeichnet, dass** die Profile der Kanten (12, 14) der zu verbindenden Holzwerkstoff-Paneele (2, 4) so ausgearbeitet werden, dass sie in zusammengefügtem Zustand einen Druck von mindestens 0,1 N/mm² bis 5 N/mm², vorzugsweise von 0,8 N/mm² bis 20 N/mm² aufeinander ausüben.

25. Verfahren nach Anspruch 21, **dadurch gekennzeichnet, dass** ein Ein-Komponenten-Klebstoff aufgetragen wird, der nach dem Zusammenfügen von zwei korrespondierenden Klebstofffilmen (26, 34) eine Klebkraft von mindestens 1 N/mm², vorzugsweise von mindestens 2 N/mm², besonders bevorzugt von mehr als 4 N/mm² aufbaut.

26. Verfahren nach Anspruch 21, **dadurch gekennzeichnet, dass** die maximale Klebkraft des jeweiligen Ein-Komponenten-Klebstoffs nach 48 Stunden, vorzugsweise nach 24 Stunden, besonders bevorzugt nach 12 Stunden erreicht wird.

27. Verfahren nach Anspruch 21, **dadurch gekennzeichnet, dass** die Trocknung des Klebstoffs bis zur Ausgleichsfeuchte in einer Verpackung für mindestens eine Holzwerkstoff-Platte erfolgt.

28. Verfahren nach Anspruch 21, **dadurch gekennzeichnet, dass** ein Klebstoff verwendet wird, der ca. 5 Min. nach dem Zusammenfügen zweier Klebstoffschichten (26, 34) mindestens 30%, vorzugsweise mindestens 50%, besonders bevorzugt mindestens 70% der maximalen Festigkeit erreicht hat.

29. Klebstoff-Verbindung zwischen zwei Holzwerkstoff-Paneelen mit jeweils einem werksseitig aufgetragenen und getrockneten Klebstofffilm (26, 34) aus Ein-Komponenten-Klebstoff, **dadurch gekennzeichnet, dass** die Klebstofffilme (26, 34) zu einer einzigen Klebstoffschicht ineinandergeflossen sind.

## Claims

1. A derived-timber panel having a surface, on which a one-component adhesive is at least partially applied in the factory to create an adhesive bond, the moisture content of which is reduced after application up to the point of moisture content equilibrium and which is block-free after reaching the point of moisture content equilibrium.

2. The derived-timber panel according to claim 1, **characterized in that** a one-component adhesive having a glass transition temperature between 0°C and 30°C, preferably between 10°C and 20°C, is applied.

3. The derived-timber panel according to claim 1, **characterized in that** a one-component adhesive is applied having an elongation at tear of 200% to 1200%, preferably of 300% to 1000%, particularly advantageously of 400% to 900%.

4. The derived-timber panel according to claim 1, **characterized in that** for creating the glue-coated derived-timber panel (2, 4) an adhesive is used with a film hardness of between 10 and 80 pendulum oscillations, preferably between 20 and 40 pendulum oscillations, particularly preferably between 25 and 35 pendulum oscillations according to the DIN specification 53157 (pendulum hardness according to König).

5. The derived-timber panel according to claim 1, **characterized in that** the one-component adhesive is selected of the group of thermoplastics.

6. The derived-timber panel according to claim 1, **characterized in that** the one-component adhesive is selected from a group comprising polyacrylates, polyurethanes and polyacetates, in particular polyacetate ethylene copolymers, or **in that** the one-component adhesive comprises mixtures of the components of the above-mentioned group.

7. The derived-timber panel according to claim 1, **characterized in that** the one-component adhesive has a viscosity of at least 2000 mPas, preferably of more than 3000 mPas, particularly advantageously of more than 6000 mPas, advantageously of more than 8000 mPas.

8. The derived-timber panel according to claim 1, **characterized in that** the applied amount of the one-component adhesive is up to about 250 g/m², preferably up to about 150 g/m², particularly advantageously about 80 g/m² to about 120 g/m².

9. The derived-timber panel according to claim 1, **characterized in that** the surface of the one-component adhesive (26, 34) has a static friction of at least about 1 N/mm², preferably of at least about 2 N/mm², particularly advantageously about 4 N/mm².

10. The derived-timber panel according to claim 1, **characterized in that** a one-component adhesive is applied which establishes an adhesive force of at least 1 N/mm², preferably of at least 2 N/mm², particularly advantageously of more than 4 N/mm² after two corresponding adhesive films (26, 34) have been joined.

11. The derived-timber panel according to claim 1, **characterized in that** the maximum adhesive force of each one-component adhesive is reached after 48 hours, preferably after 24 hours, particularly advantageously after 12 hours.

12. The derived-timber panel according to claim 1, **characterized in that** a one-component adhesive is used having an adhesive force which is established at least partially by having the adjacent adhesive films (26, 34) merge one into the other.

13. The derived-timber panel according to claim 1, **characterized in that** a one-component adhesive is selected having an adhesive force which, with respect to the strength achievable immediately after the adhesive film (26, 34) has been applied and dried, is reduced by up to about 20 %, if the derived-timber panel provided with the dried adhesive film is stored for a time period of up to three months at a moisture content of at least 6 % by weight at temperatures of -20°C to +50°C.

14. The derived-timber panel according to claim 1, **characterized in that** a one-component adhesive is selected having an adhesive force which, with respect to the strength achievable immediately after the adhesive film (26, 34) has been applied and dried, is reduced by up to about 60 %, preferably up to about 40%, particularly advantageously up to about 20%, if the derived-timber panel (2, 4) provided with a dried adhesive film is stored for a time period of up to three months at air humidity levels of between 5 and 95%.

15. The derived-timber panel according to claim 1, with profiled edges (12, 14) at least partially provided with an adhesive, **characterized in that** one profiled edge (12, 14) of a derived-timber panel (2, 4) is provided with either a groove (16) or a tongue (18), intended for non-positive engagement with a tongue (18) or a groove (16) of a second derived-timber panel (2, 4).

16. The derived-timber panel according to claim 15, with a mechanic draw-out resistance, in particular with a barb (36) and/or with positively engaging, machined profile sections (38, 40).

17. The derived-timber panel according to claim 16, with mechanical draw-out resistances formed in the groove (16) or on the tongue (18).

18. The derived-timber panel according to claim 15, with draw-out resistances which are formed as pins (36), discs and/or bands, in particular of metal or plastic.

19. The derived-timber panel according to claim 15, **characterized in that** the pins (36), discs and/or bands are inserted in the groove (16) and inclined in the direction in which the tongue (18) is moved when the derived-timber panels (2, 4) are joined.

20. The derived-timber panel according to claim 15, **characterized in that** positively engaging profile sections, in particular recesses (38) and corresponding protrusions (40) are formed, having a height not exceeding the applied layer thickness of the adhesive layer (26, 34).

21. A method of manufacturing a glue-coated derived-timber panel (2, 4) which is prepared in the factory to be glued together with another identically glue-coated derived-timber panel (2, 4), comprising the following steps:
- applying a block-free one-component adhesive to at least one surface section (20, 22, 28, 30) of the derived-timber panel (2, 4) and
- reducing the moisture content of the applied, block-free one-component adhesive up to the point of moisture content equilibrium.

22. The method according to claim 21 of manufacturing derived-timber panels, which are for immediate installation, having a top surface (6), a bottom surface (10) and edges (12, 14), **characterized in that** on at least two edges of the panel, a one-component adhesive is applied at least in sections thereof.

23. The method according to claim 21, **characterized in that** the edges (12, 14) of derived-timber panels (2, 4) to be bonded, are profiled, in particular **in that** the profiles of the edges of the derived-timber panels to be bonded are machined as corresponding profiles to be joined in a non-positive way.

24. The method according to claim 23, **characterized in that** the profiles of the edges (12, 14) of the derived-timber panels (2, 4) to be bonded are machined in such a way that in the joined state they apply a pressure of at least 0.1 N/mm² to 5 N/mm², preferably of 0.8 N/mm² to 20 N/mm² on each other.

25. The method according to claim 21, **characterized in that** a one-component adhesive is applied which establishes an adhesive force of at least 1 N/mm², preferably of at least 2 N/mm², particularly advantageously of more than 4 N/mm² after two corresponding adhesive films (26, 34) are joined.

26. The method according to claim 21, **characterized in that** the maximum adhesive force of each one-component adhesive is reached after 48 hours, preferably after 24 hours, particularly advantageously after 12 hours.

27. The method according to claim 21, **characterized in that** the drying of the adhesive up to the point of moisture content equilibrium is carried out in a package of at least one derived-timber board.

28. The method according to claim 21, **characterized in that** an adhesive is used which has reached at least 30%, preferably at least 50%, particularly advantageously at least 70% of its maximum strength approx. 5 minutes after two adhesive layers (26, 34) have been joined together.

29. An adhesive bond between two derived-timber panels each having an adhesive film (26, 34) of a one-component adhesive applied to it and dried in the factory, **characterized in that** the adhesive films (26, 34) have merged into a single adhesive layer.

## Revendications

1. Panneau en matériau dérivé du bois avec une surface sur laquelle une colle à un composant est appliquée en usine au moins par sections pour réaliser un assemblage collé, colle dont le taux d'humidité après application est réduit à l'humidité de compensation et qui est non gluante après avoir atteint l'humidité de compensation.

2. Panneau en matériau dérivé du bois selon la revendication 1, **caractérisé en ce qu'**une colle à un composant est appliquée avec une température de transition vitreuse de 0°C à 30°C, de préférence de 10°C à 20°C.

3. Panneau en matériau dérivé du bois selon la revendication 1, **caractérisé en ce qu'**une colle à un composant est appliquée avec une élongation à la rupture de 200% à 1200%, de préférence de 300% à 1000%, de manière particulièrement préférée de 400% à 900%.

4. Panneau en matériau dérivé du bois selon la revendication 1, **caractérisé en ce que**, pour réaliser le panneau en matériau dérivé du bois encollé (2, 4), il est utilisé une colle qui présente une dureté de film de 10 à 80 élongations du pendule, de préférence de 20 à 40 élongations du pendule, de manière particulièrement préférée de 25 à 35 élongations du pendule selon DIN 53157 (pendule de dureté selon König).

5. Panneau en matériau dérivé du bois selon la revendication 1, **caractérisé en ce que** la colle à un composant est sélectionnée dans le groupe des matières thermoplastiques.

6. Panneau en matériau dérivé du bois selon la revendication 1, **caractérisé en ce que** la colle à un composant est sélectionnée dans un groupe qui comprend: les polyacrylates, les polyuréthanes et les polyacétates, en particulier les copolymères d'éthylène et de polyacétate ou que la colle à un composant comprend des mélanges des composants du groupe sus-cité.

7. Panneau en matériau dérivé du bois selon la revendication 1, **caractérisé en ce que** la colle à un composant présente une viscosité d'au moins 2000 mPas, de préférence de plus de 3000 mPas, de manière particulièrement préférée de plus de 6000 mPas, de manière avantageuse de plus de 8000 mPas.

8. Panneau en matériau dérivé du bois selon la revendication 1, **caractérisé en ce que** la quantité d'application de la colle à un composant va jusqu'à 250 g/m², de préférence jusqu'à 150 g/m², de manière particulièrement préférée est de 80 g/m² à 120 g/m².

9. Panneau en matériau dérivé du bois selon la revendication 1, **caractérisé en ce que** la surface du film de colle à un composant (26, 34) présente un frottement par adhérence d'au moins 1 N/mm², de préférence d'au moins 2 N/mm², de manière particulièrement préférée de 4 N/mm².

10. Panneau en matériau dérivé du bois selon la revendication 1, **caractérisé en ce que** l'on applique une colle à un composant qui, après l'assemblage de deux films de colle correspondants (26, 34), constitue un pouvoir adhésif d'au moins 1 N/mm², de préférence d'au moins 2 N/mm², de manière particulièrement préférée de plus de 4 N/mm².

11. Panneau en matériau dérivé du bois selon la revendication 1, **caractérisé en ce que** le pouvoir adhésif maximal de chacune des colles à un composant est atteint après 48 heures, de préférence après 24 heures, de manière particulièrement préférée après 12 heures.

12. Panneau en matériau dérivé du bois selon la revendication 1, **caractérisé en ce que** l'on utilise une colle à un composant dont le pouvoir adhésif est constitué au moins partiellement par la confusion des films de colle adjacents l'un à l'autre (26, 34).

13. Panneau en matériau dérivé du bois selon la revendication 1, **caractérisé en ce que** l'on sélectionne une colle à un composant dont le pouvoir adhésif est réduit jusqu'à 20% par rapport à la résistance que l'on peut atteindre directement après l'application et le séchage du film de colle (26, 34) lorsque le panneau en matériau dérivé du bois pourvu d'un film de colle séché est stocké à des températures de -20°C à +50°C pendant une période allant jusqu'à trois mois à un degré d'humidité d'au moins 6 % en poids.

14. Panneau en matériau dérivé du bois selon la revendication 1, **caractérisé en ce que** l'on sélectionne une colle à un composant dont le pouvoir adhésif est réduit jusqu'à 60%, de préférence jusqu'à 40%, de manière particulièrement préférée jusqu'à 20% par rapport à la résistance que l'on peut atteindre directement après l'application et le séchage du film de colle (26, 34) lorsque le panneau en matériau dérivé du bois (2, 4) pourvu d'un film de colle séché est stocké pendant une période allant jusqu'à trois mois à une humidité de l'air de 5% à 95%.

15. Panneau en matériau dérivé du bois selon la revendication 1 avec des arêtes (12, 14) profilées, pourvues de colle au moins sur des sections, **caractérisé en ce qu'**une arête profilée (12, 14) d'un panneau en matériau dérivé du bois (2, 4) est pourvue soit d'une rainure (16), soit d'une languette (18), qui est destinée à l'engrènement par adhérence avec une languette (18) ou une rainure (16) d'un second panneau en matériau dérivé du bois (2, 4).

16. Panneau en matériau dérivé du bois selon la revendication 15 avec une résistance mécanique à l'extraction, en particulier avec des barbes (36) et/ou avec des sections profilées (38, 40) évidées à engagement positif.

17. Panneau en matériau dérivé du bois selon la revendication 16 avec des résistances mécaniques à l'extraction qui sont intégrées à la rainure (16) ou à la languette (18).

18. Panneau en matériau dérivé du bois selon la revendication 15 avec des résistances à l'extraction qui sont configurées comme des chevilles (36), des rondelles et/ou des bandes, en particulier en métal ou en matière synthétique.

19. Panneau en matériau dérivé du bois selon la revendication 15, **caractérisé en ce que** les chevilles (36), rondelles et/ou bandes sont mises en place dans la rainure (16) et sont inclinées dans le sens dans lequel la languette (18) est déplacée lors de l'assemblage des panneaux en matériau dérivé du bois (2, 4).

20. Panneau en matériau dérivé du bois selon la revendication 15, **caractérisé en ce que** des sections profilées à engagement positif, en particulier des creux (38) et des saillies correspondantes (40), sont évidées dont la hauteur ne dépasse pas l'épaisseur de couche de la couche de colle (26, 34).

21. Procédé de fabrication d'un panneau en matériau dérivé du bois encollé (2, 4) qui est préparé en usine pour être collé avec un autre panneau en matériau dérivé du bois (2, 4) encollé de même type avec les étapes :
- application d'une colle à un composant non gluante sur au moins une section de surface (20, 22, 28, 30) du panneau en matériau dérivé du bois (2, 4) et
- réduction de la teneur en liquide de la colle à un composant non gluante appliquée jusqu'à l'humidité de compensation.

22. Procédé selon la revendication 21 pour fabriquer des panneaux en matériau dérivé du bois qui sont conçus prêts à être posés, avec un côté supérieur (6), un côté inférieur (10) et des arêtes (12, 14), **caractérisé en ce qu'**une colle à un composant est appliquée au moins par sections sur au moins deux arêtes du panneau.

23. Procédé selon la revendication 21, **caractérisé en ce que** les arêtes (12, 14) des panneaux en matériau dérivé du bois à relier (2, 4) sont profilées, en particulier **en ce que** les profils des arêtes des panneaux en matériau dérivé du bois à relier sont évidées en profils correspondants devant être reliés à engagement positif.

24. Procédé selon la revendication 23, **caractérisé en ce que** les profils des arêtes (12, 14) des panneaux en matériau dérivé du bois (2, 4) à relier sont évidés de manière à exercer l'un sur l'autre, à l'état assemblé, une pression d'au moins 0,1 N/mm² à 5 N/mm², de préférence de 0,8 N/mm² à 20 N/mm².

25. Procédé selon la revendication 21, **caractérisé en ce que** l'on applique une colle à un composant qui, après l'assemblage de deux films de colle correspondants (26, 34), constitue un pouvoir adhésif d'au moins 1 N/mm², de préférence d'au moins 2 N/mm², de manière particulièrement préférée de plus de 4 N/mm².

26. Procédé selon la revendication 21, **caractérisé en ce que** le pouvoir adhésif maximal de chacune des colles à un composant est atteint après 48 heures, de préférence après 24 heures, de manière particulièrement préférée après 12 heures.

27. Procédé selon la revendication 21, **caractérisé en ce que** le séchage de la colle jusqu'à l'humidité de compensation se fait dans un emballage pour au moins une plaque de matériau en matériau dérivé du bois.

28. Procédé selon la revendication 21, **caractérisé en ce que** l'on utilise une colle qui, environ 5 minutes après l'assemblage de deux couches de colle (26, 34), a atteint au moins 30%, de préférence au moins 50%, de manière particulièrement préférée au moins 70% de la résistance maximale.

29. Assemblage collé entre deux panneaux en matériau dérivé du bois avec respectivement un film de colle (26, 34) appliqué en usine et séché de colle à un composant, **caractérisé en ce que** les films de colle (26, 34) se confondent en une seule couche de colle.
